# EUROPEAN PATENT SPECIFICATION

(11) **EP 1 627 830 B1**
(45) Date of publication and mention of the grant of the patent: **29.10.2008**
(21) Application number: 05017355.8
(22) Date of filing: 10.08.2005
(51) Int. Cl.: B65G 1/04

(54) **System and method of handling and storing articles**
Verfahren und Vorrichtung zum Handhaben und Lagern von Gegenständen
Dispositif et procédé de manutention et d'emmagasinage d'objets

(30) Priority: 16.08.2004 SE 0402030
(43) Date of publication of application: 22.02.2006
(73) Proprietor: MOVING AB, 265 82 Astorp (SE)
(72) Inventor: Berg, Ulf, 461 91 Trollhättan (SE); Turesson, Per, 467 95 Grästorp (SE); Karlsson, Kent, 460 20 Sjuntorp (SE)
(74) Representative: Andersson, Mikael Per Robert

(56) References cited:
- EP-A- 0 525 851
- DE-A1- 10 102 999
- DE-A1- 10 225 332
- DE-A1- 19 509 951
- US-A- 5 473 545

## Description

### Field of the Invention

The present invention relates to a system for handling a storage, comprising an allocating means arranged to allocate a place in a storage to a number of objects, and a memory means arranged to maintain information about vacant space in said storage.

### Background Art

A conventional storage comprises a complex of shelves made up of a number of sets of shelves which usually are placed so as to form between them a number of passages. The sets of shelves in turn comprise a number of shelves which are intended to support the objects that are to be stored.

In a storage involving a full- or semiautomatic storage handling system, a computer is used to store information about where in the complex of shelves the respective objects are kept. In such a system, it is also common for the sets of shelves to be arranged relatively close to each other so as to form narrow passages in which specially adjusted computer-controlled cranes travel back and forth. The cranes are provided with a handling unit which places objects in the sets of shelves and removes them therefrom. The handling unit is vertically adjustable relative to the sets of shelves so as to be able to place and remove objects from shelves at different heights in the sets of shelves.

It is a general requirement that a storage should have a high storage density. As a rule, it is also required that it should be possible to quickly place objects in the storage and quickly remove them therefrom.

DE 203 03 376 U1 discloses a handling unit for use in a full- or semiautomatic storage handling system. In this system, the sets of shelves comprise a large number of rectangular compartments which each are intended to receive a container. The document further discloses how the computer-controlled crane and the handling unit are said to be designed to allow the passages between the sets of shelves to be narrow, thereby trying to reduce the necessary floor area. To this end, the document discloses a number of different ways to design the handling unit so that it engages one or both sides of the container. It is described how the container can be squeezed from both sides or how one side can be engaged by suction cups that are connected to pressure below atmospheric. Moreover the document indicates use of a buffer stock that may be used to make the handling of certain objects quicker.

DE 43 28 631 A1 discloses a handling unit which is intended to handle storage containers for small articles. The storage containers are in turn intended to be placed in special compartments in a complex of shelves. Also this document discloses how the handling unit is said to be designed to allow the passages between the sets of shelves to be narrow, thus trying to reduce the necessary floor area. The document discloses how the handling unit is formed with two link arm systems which are each provided with a gripping plate. The handling unit is intended to engage, by the gripping plates, a storage container on the sides of the storage container which project from the compartment. The proposed handling unit thus places special requirements on the design of both the compartments and the storage containers.

US 6,357,983 B1 discloses another handling unit provided with a link arm. The handling unit is specially adjusted to be able to remove flat, long and narrow objects from a set of shelves without requiring much space for the necessary movement of the link arm. It is further described how the sets of shelves are suitably arranged in a ring around the handling unit.

EP 0 192 259 A1 discusses how the special storage containers are to be designed so that the necessary volume for the set of shelves can be made small. To this end, it is described how the lateral faces of the storage containers are to be formed with recesses at the bottom of the storage container. The document asserts that in this way it has been made possible to manufacture storage containers which relative to their storage capacity require but a small volume in the sets of shelves and which are inexpensive to manufacture. Also a handling unit is described, provided with special gripping means intended to engage in the recesses in the storage containers. The document further discloses how the storage containers are to be suspended from the sets of shelves so that the recesses in the storage containers can be reached by the handling unit. This construction thus requires that the sets of shelves, the storage containers and the handling unit be designed according to a number of mutually compelling restrictions.

SE 353,695 discloses a system which is practically identical with the one according to EP 0 192 259 A1. The Swedish document describes how the containers comprise recessed corner fittings. A special handling unit is adapted to engage in these recesses. The Swedish document discloses, however, a conventional set of shelves with compartments. Like in the above-mentioned EP publication, the compartments have a size which is adjusted to the size of the containers.

US 6,234,550 B1 discloses a further variant of a handling unit provided with arms which are squeezed against the sides of the storage containers. These are in turn formed with recesses which cooperate with special gripping elements on the arms of the handling unit.

WO00/13991 discloses how it is possible to design a storage so that it can handle different kinds of objects. According to this document, the complex of shelves or the sets of shelves is/are designed so that there are differents parts of the storage that have different ypes of sets of shelves and shelves, respectively. Part of the storage is arranged with shelves which only comprise supporting edges and part of the storage is formed with shelves that are complete. By designing a handling unit so that one and the same handling unit can place objects on the different types of shelves and remove objects therefrom, it will thus be possible to provide a compromise between flexibility and storage density which is satisfactory on many occasions.

Finally US 5,449,262 discloses another type of storage in which a handling unit is movable up and down and in which the storage containers are placed along an endless belt. This type of storage can be made extremely compact since the crane passages can be excluded by rationalisation, but, as mentioned above, the sets of shelves must be replaced by relatively complicated constructions which can support and move the storage containers. The handling unit described in this document holds by clamping force the sides of the storage containers.

DE 101 02 999 discloses an arrangement for placing and storing individual objects on shelves in a storage where no fixed positions are predetermined for the objects. The arrangement calculates a suitable position to place the individual object with consideration taken to the size of object. The objects are transported to a handling unit by means of a conveyor belt and are then placed on the correct shelf, one by one, by means of a suction cup of the handling unit.

There is currently no perfectly satisfying construction that satisfies the above-mentioned general requirements on a storage in the respects that it should have a high storage density and that it should be possible to quickly place objects in the storage and quickly remove them therefrom. For the purpose of trying to satisfy these requirements, there are various constructions which on the one hand involve different types of handling unit and, on the other, involve different types of storage containers which are inexpensive and space-saving.

### Summary of the Invention

An object of the invention is to provide a system for handling a storage, which should offer conditions that allow a high storage density to be achieved

A further object of the invention is to provide a system for handling a storage, which should offer conditions that allow objects to be quickly placed in the storage and quickly removed therefrom.

According to the invention, the above objects are achieved by a system for handling a storage. The system for handling a storage comprises an allocating means arranged to allocate a place in a storage to a number of objects, a memory means arranged to maintain information about vacant space in said storage, an identifying means arranged to identify a size of said objects along at least one dimension, the memory means being arranged to maintain storing information about a size of vacant continuous space in said storage along at least one dimension, and the allocating means being arranged to allocate said place to said objects based on an allocating function in which said size along said at least one dimension which is intended to be identified constitutes a first variable and the storing information about the size of the vacant continuous space in said storage along said at least one dimension constitutes a second variable. The inventive system for handling a storage is intended for use in a storage where a number of shelves are designed so as to be able to each receive along their entire width a plurality of objects, where appropriate of different sizes, arranged side by side. By identifying the size of the objects along at least one dimension, maintaining storing information about vacant continuous space, and using these two information quantities as a part in selecting a suitable space, a storage can be provided, which involves what is referred to as floating arrangement of the objects. By floating is meant that there are no given positions, for instance in the form of a storage container or tray for each compartment or three storage containers for each compartment or the like, but instead the information is used in such a manner that if there is space (vacant continuous space) for a certain object on a certain shelf (on an empty shelf or beside a previously arranged object), this object can be placed on said shelf. In this way, it is possible, for example, to place on one shelf, side by side, a large object and a plurality of smaller objects, while on another identical shelf, it is possible to place side by side two of said large objects and, if there is still space, it is possible to place a number of smaller objects on the latter shelf. In this manner, it is possible to provide a considerably higher storage density compared with prior-art systems. In a system involving storage containers or trays, only one product type is placed in one and the same storage container. This means that for each product type which is placed in the storage and whose quantity does not amount exactly to the volume of the storage containers, there will be at least one storage container that is only partly filled. In relation to prior-art systems for handling a storage, the inventive system also offers the possibility of placing and removing objects considerably more quickly since it is possible to place objects in the storage in a floating manner, for example by a so-called pick rate or some other parameter that affects the speed of the system. By pick rate is meant how often a certain product type is placed in the storage and removed therefrom. For the system to be perceived as quick, product types having a high pick rate should be easy of access, which in most cases means that they are to be placed close to the position where the crane collects and leaves objects that are to be moved into and out of the storage. By using floating arrangement, a desired number of a certain product type can be placed in an easily accessible space whereas possibly additional products of the same type can be placed in a space in the storage which takes a longer time to be reached. In the inventive system, this causes no waste in respect of useful space since other product types can be placed side by side in a floating manner both in the easily accessible space and in the space which takes a longer time to be reached. In a system with storage containers, this method would most probably imply that for each such product type which is to be found in two places there will be two only partly filled storage containers. Owing to the floating arrangement, objects that are lower ranked with respect to pick rate will only be moved from the most easily accessible space to the extent that is necessary with respect to the actual space requirement for the desired number of objects that are higher ranked.

A further advantage of the floating arrangement is that, when the pick rate is changed for a certain product type, it is possible to gradually change the placing of new objects of the same product type so that they are placed in a suitable space with respect to the new pick rate while the previously arranged objects are removed from the storage or moved within the storage when an opportunity occurs.

The system further comprises a group assigning means arranged to assign to each of said objects a group membership based on a group assigning function in which said size along said at least one dimension that has been identified constitutes a first variable, the system being arranged to combine a plurality of objects which have been assigned the same group membership into a group, the allocating means being arranged to allocate a place to said group, and the first variable in the allocating function comprising a maximum size of the group along said at least one dimension which is intended to be identified. By assigning to the objects a group membership, it is possible to handle in a rational way a large number of objects of different sizes. By combining a plurality of objects of the same group membership, it is possible, where appropriate, to place a number of objects in succession and thus, if possible, use the option of placing a plurality of objects in succession along the depth of the shelf. By the allocating means using information about the size of the group along said at least one dimension (for instance width), entire groups of objects can be placed in a floating manner in the way that has been described above. As mentioned above, there are additional parameters which according to other preferred embodiments are also taken into consideration. Such a parameter is the pick rate. Even if two objects based on the identified size should have been placed in the same group, information about the expected pick rate can make it convenient to give the objects different group memberships. Such situations arise, for example, if the objects are of different product types which have distinctly different expected pick rates, or if one of the product types has such a high expected pick rate that one chooses to place objects of this product type in a group of its own.

Preferred embodiments of the invention will be evident from the appended claims.

Said first variable for assigning the respective group memberships is advantageously defined by mutually excluding size ranges of said size along said at least one dimension. This is a simple and robust way of dividing the objects into groups. Moreover this is a division into groups which facilitates the construction of the unit which is to handle the different groups. By the objects within a group all having a size within a certain range, it is possible to construct, for instance, the handling unit to take a number of different positions which manage the respective groups. A further advantage is that by selecting suitable size ranges, it is possible to ensure that the objects in a group can easily be moved by the front or rear object in a group being acted on without an object included in the group being set at an angle. As mentioned above, the first variable can be supplemented with additional variables for assigning the group membership.

According to a preferred embodiment, said maximum size of a group is defined by the actual size of the object in the group which has the maximum size along said at least one dimension. By defining the maximum size of the group as the actual size, it is possible to arrange the respective groups in a floating manner so that the space, when arranging the group, is used in an optimal manner.

According to another preferred embodiment, said maximum size of a group is defined by the maximum size an object in said group membership is allowed to have along said at least one dimension. By thus defining the maximum size of the group, it is possible to exchange objects in a previously arranged group or supplement a previously arranged group with additional objects by using the original group assigning function.

According to yet another preferred embodiment, the maximum size for certain groups is defined as the maximum actual size and the maximum size for certain other groups as the maximum permissible size. For example, this can be used in such a manner that the actual size is used for groups of objects which belong to product types with a high pick rate and the permissible size is used for groups of objects with a low pick rate. In this manner, it is possible to provide a high storage density for objects that are frequently moved while maintaining greater flexibility for objects that are less frequently moved.

According to a preferred embodiment, the identifying means is arranged to identify a maximum width and a maximum depth of said objects, the memory means is arranged to maintain storing information about a maximum width and a maximum depth of vacant continuous space which has a constant depth across its entire width, the group assigning means is arranged to assign to each of said objects a group membership based on a group assigning function in which the width constitutes a variable, the allocating means is arranged to allocate a place to said objects or a group, variables in the allocating function comprising width and depth of vacant continuous space and width and depth of said objects, the system being arranged to combine a number of objects of the same group membership into a group so that the group achieves a maximum depth which is smaller than the depth of the vacant continuous space to which the object or the group has been allocated.

By identifying both width and depth of the objects and maintaining the information about both width and depth of vacant spaces, it is possible to supply objects in a floating manner along both width and depth of the shelves. As a result, a very high storage density can be obtained while at the same time high flexibility is maintained so that, for instance, pick rate or other parameters that are to be considered important can be taken into consideration. It should be noted that the definition of "a maximum depth of vacant continuous space having a constant depth across its entire width" has at least two meanings which from a practical aspect differ from each other, inter alia, as to whether the system is allowed to block smaller objects with larger objects or not, and from a logical aspect differ from each other as to whether the vacant continuous space is searched with regard first to width, or to depth.

If the continuous space is defined based on portions with a constant depth, and the width of these portions with a constant depth indicates the width of the vacant continuous space, a system is ensured, where all vacant spaces are filled with objects which fill up the vacant spaces. This further adds to the possibility of providing a high storage density.

Advantageously the width of the respective continuous spaces is defined, in the case that the depth of the continuous space is limited by a plurality of previously allocated objects or groups, by the width of the respective previously allocated objects or groups. By introducing this check, it is ensured that even if there is a continuous space with a constant depth, each previously arranged group will only be supplemented with additional objects of the same group membership, thus ensuring that objects will not be blocked.

According to a preferred embodiment, the system is arranged to combine, in at least a first station, a plurality of objects which have been assigned the same group membership into a group and, after combining the objects into said group, transfer the group to at least a second station. By combining the group in a first station and then transferring the entire group to a second station, the first station can be released so that it will be possible to start combining a new group immediately after combining the first group. In the second station, the group can wait until a crane is available to collect it.

The above objects are also achieved by a method of the kind as defined in the independent method claim. Advantages of the inventive method will be evident from the above description of how the inventive system is intended to function.

Preferred embodiments of the method are defined by the dependent claims. Advantages of the features that are defined in the dependent claims have also been described in detail in connection with the description of the inventive system.

### Brief Description of the Drawings

The accompanying schematic drawings illustrate a currently preferred embodiment of the invention.
Fig. 1 illustrates a set of shelves and a crane which can be moved back and forth along the set of shelves and which is provided with a handling unit which in turn can be moved up and down between the different shelves of the set of shelves.
Fig. 2 is a front view of the set of shelves shown in Fig. 1.
Fig. 3 is a top plan view of the shelf indicated by an arrow in Fig. 1 and Fig. 2.
Fig. 4 is a layout of a storage area.
Fig. 5 is a top plan view of the handling unit shown in Fig. 1.
Fig. 6 is a rear view of the handling unit shown in Fig. 5.
Fig. 7 is a simplified flow chart of how information is handled in a system for handling a storage according to the invention.

### Detailed Description of a Preferred Embodiment

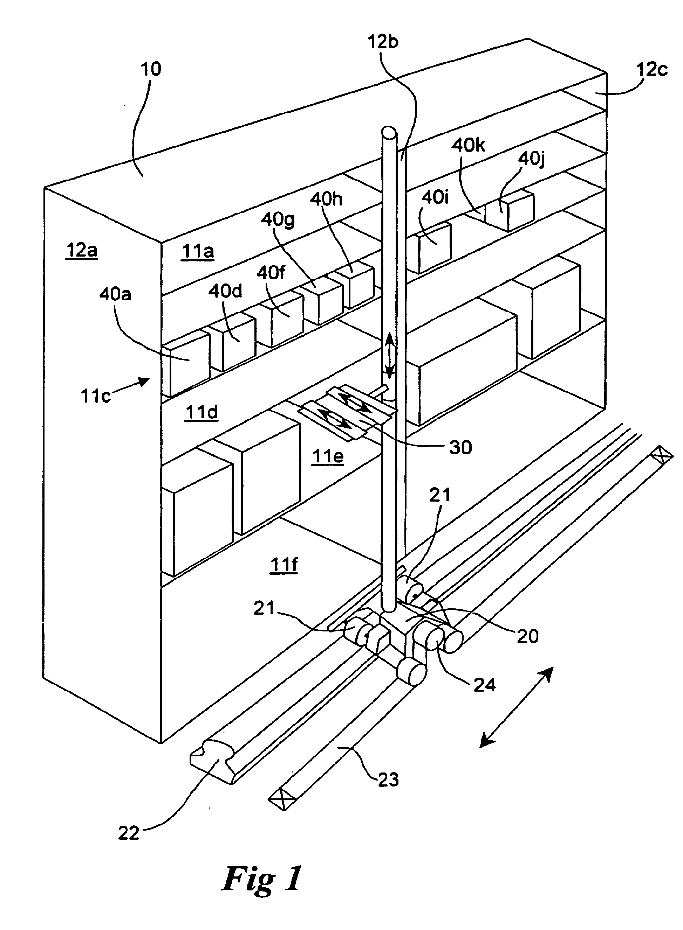

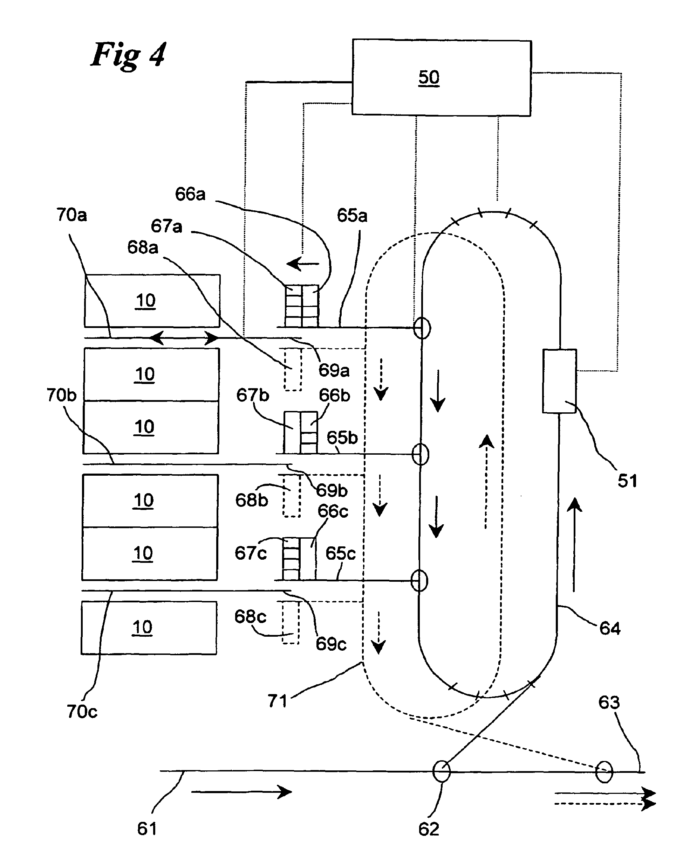

A storage of the type shown in Fig. 4 comprises a number of sets of shelves 10 of the type shown in Fig. 1. Each set of shelves 10 comprises a number of shelves 11a-f which are supported by some kind of frame. The set of shelves 10 shown in Fig. 1 has three wall pieces 12a-c, of which two constitute end walls 12a, 12c of the set of shelves 10 and the third forms an intermediate wall 12b. It should be noted that the frame can be designed in various ways, such as with posts interconnected by diagonal braces. There are many different types of commercially available sets of shelves of this kind which can support a number of shelves as shown in Fig. 1. The exact design of the frame is not important to the accomplishment of the invention and will therefore not be described in more detail.

The storage also comprises one or more full- or semiautomatic cranes 20 which can be moved back and forth along the sets of shelves 10. In most cases such a crane 20 travels on a rail. The crane 20 comprises two rollers 21 which roll on a rail 22 which extends parallel to the sets of shelves 10. A toothed belt 23 extends along the rail 22 and is at its ends fixed relative to the rail 22 and the sets of shelves 10 and is passed over a deflecting roller 24 of the crane 20. By rotating the deflecting roller 24 by an electric motor (not shown), the crane 20 is driven back and forth along the rail 22. There are also various types of cranes of this kind which are commercially available. The exact design of the crane is not important to the accomplishment of the invention and will therefore not be described in more detail.

The crane 20 supports a rod 25 which extends from the lowermost shelf 11f to the uppermost shelf 11a. The rod 25 can at its top be provided with supporting rollers which run along a rail mounted in the ceiling, corresponding to the arrangement at the bottom. A corresponding drive can also be arranged at the upper part of the rod 25.

A carrier 26 is arranged on the rod 25 and can travel up and down the rod 25. The carrier 26 is in turn arranged to carry a handling unit 30. A way of performing this motion is to arrange a toothed belt which extends along the rod and which is deflected by a deflecting roller which is arranged on the carrier. By rotating the deflecting roller, the carrier is moved up and down the rod (see the basic sketch regarding the corresponding drive of the crane 20 along the rail 22). Another way of achieving this function is to configure part of the circumferential surface of the rod 25 as a gear rack which extends along the entire length of the rod, and to provide the carrier 26 with a gear wheel meshing with the gear rack. When the gear wheel is rotated, for example by an electric motor, the carrier 26 will travel up and down the rod 25. Another alternative is to design the rod 25 as a screw which extends in a tube. With such a construction, the carrier 26 is provided with a part which engages a groove or edge extending along the tube, so that the carrier 26 cannot rotate about the tube, and a part resembling a nut which engages the screw. By rotating the screw and holding the nut still or vice versa, the carrier 26 will travel up and down the rod 25. The described construction involving a rod 25 which extends along the height of the set of shelves 10 can also be replaced with a pneumatic or hydraulic telescopic cylinder which can be retracted or extended, so that the handling unit 30 can be moved from the lowermost shelf 11f to the uppermost shelf 11a. Also for this part of the construction, there are a number of different commercially available constructions to be chosen. Also the exact design of the function to raise and lower the handling unit is not important to the accomplishment of the invention and will therefore not be described in more detail.

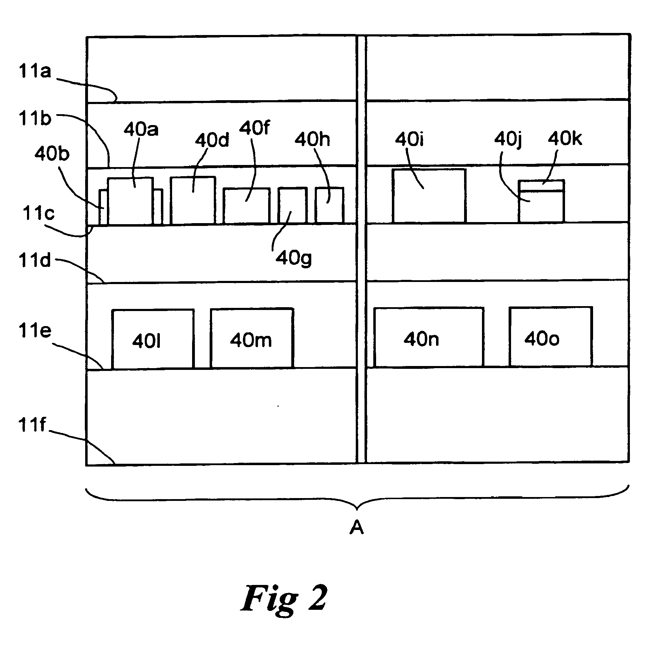

As is evident from Fig. 2, the inventive system for handling a storage is intended for use in a storage where a number of shelves 11a-f are designed so as to be able each to receive along the width A a plurality of objects 40a-o, where appropriate of different sizes, arranged side by side. As is evident from Fig. 1 and Fig. 2, the set of shelves 10 comprises a number of shelves 11a-d with a first maximum height of the objects which these shelves 11a-d can support and a number of shelves 11e-f with a second maximum height of the objects which these shelves 11e-f can support. The objects 40a-o are placed directly on the shelves 11a-f without being placed in a special storage container.

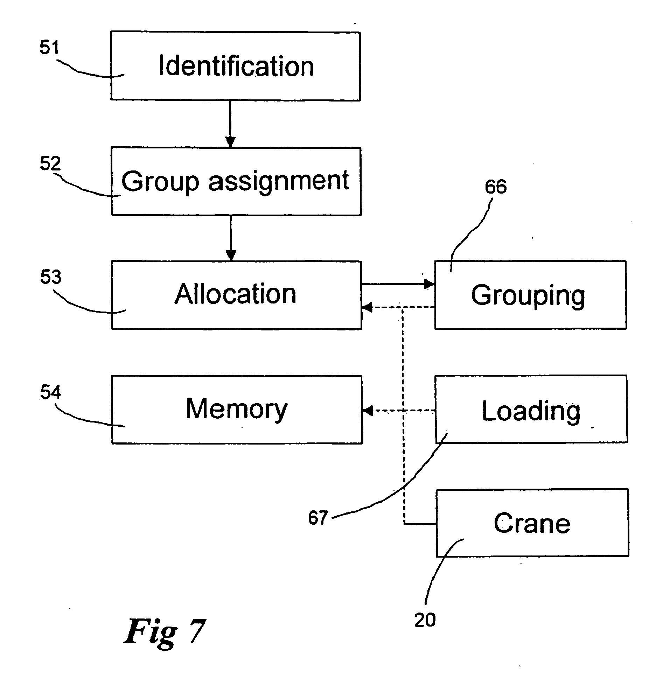

The system for handling a storage comprises some kind of control circuit 50, suitably in the form of a computer. The logic of the control circuit is generally described with reference to Fig. 7. The function of the control circuit will be described below in terms of how objects are arranged in different places on the different shelves.

As shown in Fig. 4, the objects arrive from a production line, a depalletiser or the like, on a feeding conveyor 61. The objects can be conveyed via a switch 62 to a discharging conveyor 63 or to a first conveyor loop 64. The objects on the first conveyor loop 64 are identified with regard to size and any other critical parameters in an identifying station 51. Identification can occur, for example, by three-dimensional laser scanning equipment, camera and image processing system, photocells or the like, to determine the actual size of the object. The size can also be determined by reading size-related information which is already available on the object. Such reading may occur, for example, by bar code reading or reading an RFID tag. In the identifying station 51, width, depth and height of the respective objects are registered. The control circuit 50 determines by an allocating function which, based on information about the size of the object and information about vacant space in the storage, calculates a suitable placing of the respective objects.

In the embodiment illustrated, the shelves 11a-f have a depth of slightly more than 800 mm, and the size of the objects vary from about 150 to about 800 mm. To be able to use the storage area to a sufficiently great extent, the present system is arranged to be able to place a number of objects in a queue or train so that there will be a plurality of objects along the depth of the set of shelves.

The objects 40a-o on the first conveyor loop 64 are assigned a group membership according to the size of the objects 40a-o. In this embodiment, the group membership is assigned to the objects 40a-o according to the width they will occupy on the shelf 11a-f. In this embodiment, the objects are assigned group membership according to the mutually excluding size ranges 150-<200, 200-<300, 300-<400, 400-<500, 500-<600, 600-<700, 700-800.

The objects are further conveyed on the conveyor loop 64 to be deflected, according to the assigned group membership, to one or more loading conveyors 65a-c which is/are for the moment intended for the respective groups. In this embodiment, the allocating function of the control circuit 51 calculates a suitable placing of the group of objects based on the maximum actual width of the objects included in the group. The loading conveyor 65a-c leads to a grouping station 66a-c where the objects are combined into a group or train of objects. When a desired number of objects have been combined into a group, the entire group is transferred to a loading station 67a-c. The crane 20 is arranged to collect by its handling unit 30 the group of objects from the loading station 67a-c and arrange it in the place in the storage which is determined by the allocating function of the control circuit 50. When the crane 20 travels to the loading station 67a-c, it usually already carries a number of objects which have recently been collected from the storage. These objects are unloaded, if possible, from the handling unit 30 of the crane 20 in an unloading station 68a-c while at the same time the new objects are loaded onto the handling unit 30. The unloading station 68a-c and the loading station 67a-c are positioned in a pair opposite each other and on opposite sides of a crane passage 69a-c. In the present embodiment, this passage 69a-c extends further and forms a crane passage 70a-c between the sets of shelves 10. In the description above, a unit (involving grouping station, loading station, unloading station and the associated crane passage) has been described, but as is evident from Fig. 4, there are three such units to serve three crane passages.

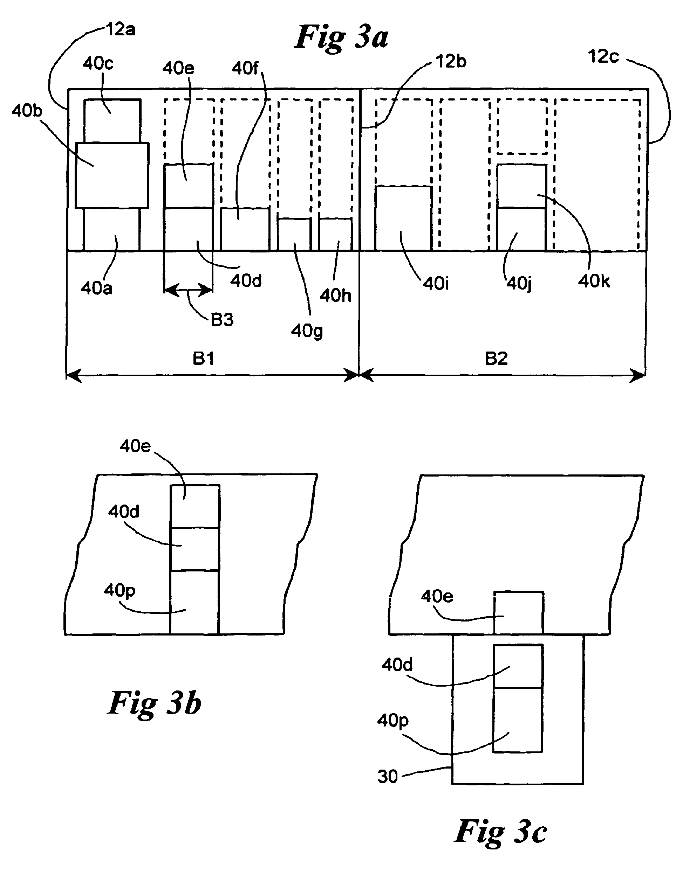

As is evident from Fig. 3, the objects are arranged in a floating manner. There are no storage containers with given positions, but the objects are placed directly on the shelves 11a-f where a suitable place is available. When placing objects, the available surface is limited by previously arranged objects and any supports 12a-c for the shelves 11a-f. Fig. 3 shows how the left part (between the supports 12a and 12b) of the shelf 11c has been filled across its entire width B1, but along certain parts of its width B1 only partly across its depth D, while the right part (between the supports 12b and 12c) of the shelf 11c has been only partly filled both with regard to width B2 and depth D. In the leftmost group or queue of objects 40a-c, three relatively large objects are placed in the set of shelves 10 so as to substantially cover the entire depth D of the shelf 11c. In the next group, two objects 40d-e are placed. This group 40d-e covers across its width B3 the depth of the shelve 11c only partly. There is thus a vacant space behind this group of objects 40d-e. There are also vacant spaces behind the other three objects 40f-h on this part of the shelf 11c.

When the control circuit 50 via its allocating function has calculated that it is convenient to place one more object in the second leftmost group of objects 40d-e, the crane 20 collects with its handling unit 30 the intended object 40p from a loading station 67a-c. The handling unit 30 is placed in front of the current group of objects 40d-e and is moved onto the shelf 11c so that the objects 40d-e which are already positioned there are moved inwards on the shelf 11c.

To prevent objects from blocking each other, a vacant continuous space is considered to have the same width as previously arranged objects 40d-e and a depth which corresponds to the actual difference between the depth D of the shelf 11c and the total actual depth of the previously arranged objects 40d-e across their width. The width of the vacant continuous space can be defined as the actual width of the previously arranged objects or as the maximum permissible width of the group to which the placed objects belong. The first alternative offers a higher storage density and requires the control circuit 50 to have control over the actual width of the placed objects. The latter alternative can offer higher flexibility and, in some cases, a simpler solution in terms of control engineering.

As shown in Fig. 3a, there are on the left part of the shelf 11c four vacant continuous spaces 41a-d behind the previously arranged objects 40d-h. The three leftmost vacant spaces 41a-c have different depths. By determining the size of a vacant space based on the fact that it should have a constant depth, the space behind the objects 40e-g is divided into three different vacant continuous spaces 41a-c. The two left vacant spaces 41a-b have the same width. The two placed objects 40g-h have the same width and depth. There is thus a space behind these objects 40g-h which has a constant depth across its entire width (which corresponds to the total width of the two objects). Thus, an object having this double width could be placed in front of these two objects 40g-h. In the same way, an object with a width corresponding to the sum of the objects 40d-h grouped in groups 40d-f, 40d-g, 40d-h, 40f-g, 40f-h could be placed in front of these groups of objects. In the present preferred embodiment, this thoughtway is not used since it places high requirements on the handling unit and since it results in smaller objects being blocked by larger objects. By dividing the vacant continuous space 41a-d based on the fact that it should have a constant depth across its entire width, the groupings 40d-f, 40d-g, 40d-h, 40f-g, 40f-h which do not have a constant depth are broken up. The space that is available behind them will be divided into three vacant continuous spaces 41a-c as described above. The latter space behind the objects 40g-h with the same depth is divided into two vacant continuous spaces 41c-d by the condition that if constant depth is defined by previously arranged objects 40g-h, the width of the vacant continuous space 41c and 41d is defined as the width of each of the objects 40g and 40h. This condition is also true for the other vacant continuous spaces 41a-b; they have a width corresponding to the width of the previously arranged objects 40d-g and 40f respectively. If there are groups of objects side by side and the groups have the same depth, the space behind them is thus divided into vacant continuous spaces, so that there will be a vacant continuous space behind each group of objects and so that each vacant continuous space has the same width as the respective groups.

Three previously arranged object 40i-k are shown in the right part of the shelf 11c. There is a vacant space between the rightmost object 40i and the group of the other objects 40j-k. The entire space is considered to define a vacant continuous space which has a constant depth across its entire width. This space can be used to place additional objects of the same width as that of the rightmost object 40i. It can also be used to place two objects or groups of objects of the same width as that of the rightmost objects 40g-h in the left part of the shelf 11c.

If an object 40d is to be removed from the shelf 11c, the handling unit 30 is placed in front of the object 40d or the group of objects 40d-e, 40p where the current object is to be found. The entire group of objects is pulled out towards and past the front edge of the shelf 11c, so that the objects are instead carried by the handling unit 30. The group of objects can be pulled onto the handling unit 30 until the current object 40d is carried by the handling unit 30 and is freed from the shelf 11c (see Fig. 3c). If the object 40p which is put onboard the handling unit before the current object 40d is not to be removed from the storage, this object or these objects can be moved away from the handling unit 30 and onto a shelf which is opposite the shelf 11c from which the current object 40d has been removed. By continuing to move the group in the same direction as when being removed from the shelf 11c, the undesired object 40p in front can be placed on an opposite shelf so that the current object 40d will be alone on the handling unit 30, thus allowing the crane 20 to travel and deliver the current object 40d.

As mentioned above, the crane 20 travels to an unloading station 68a-c and delivers the object 40d. At the same time as the current object 40d is delivered, a load is received from a loading station 67a-c opposite the unloading station 68a-c. The current object 40d is passed, by a conveyor system which corresponds to the conveyor system for incoming objects, to some kind of packeting equipment, palletiser, loading platform or the like where the object is to be used or be further conveyed. The conveyor system for discharging objects comprises a conveyor loop 71 which can be closed so that the objects move in a circle if the service of subsequent equipment should be interrupted.

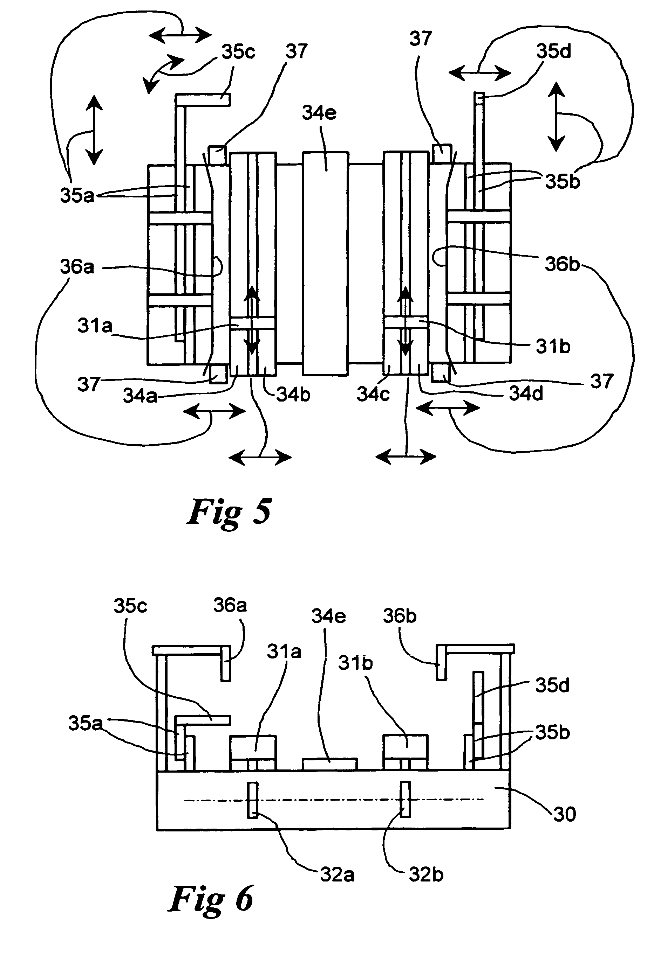

As is evident from Fig. 5 and Fig. 6, the handling unit 30 comprises two drivers 31a-b which are arranged to be able to move an object or a group of objects from the handling unit 30 to a shelf. The drivers 31a-b are each attached to a chain 32a-b, each chain extending in an endless loop about a rotary shaft 33a adjacent to the front part of the handling unit 30 and a rotary shaft 33b adjacent to the rear part of the handling unit 30. Each of the drivers 31a-b extends upwards into a slot between two elongate sectional elements 34a-b, 34c-d. The drivers 31a-b and the surrounding sectional elements 34a-d can be moved towards and away from each other so that they can carry objects, or groups of objects, of different widths. There is a stationary sectional element 34e between the drivers 31a-b and the surrounding sectional elements 34a-d. The sectional elements 34a-e are arranged to carry the objects and allow them to be slidingly moved away from and onto the handling unit 30.

The handling unit 30 further comprises two arms 35a-b which are arranged to be extended so that they reach above the shelves 11. The arms 35a-b are each provided with a gripping unit 35c-d which is intended to engage the rear side of the objects that are placed on the sets of shelves 10. The arms 35a-b can extend so far into the sets of shelves 10 that the gripping units 35c-g can engage the rear side of an object that is placed on the rearmost part of a shelf 11. In the present case, the arms 35a-b comprise two gear racks which face each other with their teeth and which both mesh with a gear wheel arranged between the gear racks. One gear rack is fixed relative to the handling unit and the other gear rack constitutes part of the extendable arm 35a-b. When the gear wheel is rotated, it will move relative to the fixed gear rack. The other gear rack will move to the same extent relative to the gear wheel as the gear wheel moves relative to the fixed gear rack. The two gear racks will thus be moved relative to each other a distance which is twice the distance that the gear wheel moves relative to the fixed gear rack. This construction can, where appropriate, be replaced with some kind of servo-operation, telescopic motion or other technical solution which allows the arms 35a-b to extend from the handling unit and into the sets of shelves 10.

At the outermost end of each of the arms 35a-b there is, as mentioned above, a gripping element 35c-d which is adapted to engage the rear side of the objects placed on the shelf 11. The gripping element 35c-d comprises a short pin which can be moved between two different positions: a gripping position and a neutral position. Fig. 5 and Fig. 6 illustrate how the left gripping element 35c is in the gripping position while the right gripping element 35d is in the neutral position. The pin 35c-d extends in the neutral position straight upwards and thus has a limited extent in the transverse direction. In this direction the length of the pin is essentially limited by the lowest height between the shelves which in the vertical direction are arranged closest to each other. In the gripping position, the pins 35c-d extend in the transverse direction towards each other (in the transverse direction). In this position, they can engage the rear side of an object.

When an object or a group of objects is to be collected from a shelf 11c, the arms 35a-b extend inwards on each side of the object or the group of objects with the gripping elements 35c-d in the neutral position. Then the gripping elements 35c-d are put in the gripping position behind the object or behind the rearmost object in the group. The arms 35a-b are pulled back over the handling unit 30 and then pull, by the engagement of the gripping elements 35c-d with the rear side of the rearmost object, the entire group of objects towards the handling unit 30. As mentioned above, the group of objects is pulled onboard the handling unit 30 to such an extent that the object in question is onboard the handling unit 30. Subsequently the gripping elements 35c-d are put in the neutral position and the arms 35a-b are, where appropriate, pulled further backwards over the handling unit 30 so as not to extend into the set of shelves any more.

To be able to handle objects of different sizes, the arms 35a-b are movable towards and away from each other (in the transverse direction).

The rotary motion of the gripping elements 35c-d is performed by their being connected to a gear-operated shaft which extends concentrically with the axis of rotation of the gripping elements 35c-d. In the present construction, the shaft is over part of its extent gearwheel-shaped in cross-section. The shaft is connected to the mobile gear rack and is operated by a gear wheel which is supported by the same unit that supports the gear wheel positioned between the gear racks. By the shaft being shaped as an extremely wide gear wheel, the gear wheel of the mobile unit can remain in engagement with the shaft also when this is moved. The above-described motion between the gripping position and the neutral position of the gripping elements 35c-d can be provided in other ways. For example, the motion can be provided by a piston-and-cylinder assembly where the piston is retracted into the cylinder in the neutral position and extended in the gripping position. The motion can also be provided by servo-operation which provides a rotary motion of a pin corresponding to the rotary motion that has been described above.

The arms 35a-b and their gripping elements 35c-d can thus be moved towards and away from each other, they can extend into the sets of shelves and be pulled out from the same, and they can be moved between a neutral position where they can be inserted on both sides of objects and a gripping position where they engage the rear side of objects.

The handling unit 30 further comprises a pair of guide rails 36a-b which can be moved towards and away from each other (in the transverse direction). The guide rails 36a-b extend in the direction which in use of the handling unit 30 extends along the depth D of the shelves 11. Also the arms 35a-b and the above-mentioned sectional elements 34a-e extend in this direction. The guide rails 36a-b are arranged to abut against the sides of the objects which are positioned on the handling unit 30. In this way the guide rails 36a-b can be used to centre the objects on the handling unit 30. They also ensure that the objects are not set at an angle when moved onto or away from the handling unit 30. As shown in Fig. 6, the guide rails 36a-b are fastened in such a manner that they extend from the outside of the handling unit 30 and upwards over the arms 35a-b so that they can abut against objects which are narrower than the distance between the arms 35a-b.

As mentioned above, the drivers 31a-b and their sectional elements 34a-d, the arms 35a-b and the guide rails 36a-b are movable mutually and in pairs relative to each other. In the present embodiment, these three movements can be provided independently of each other.

With groups consisting of a large number of small objects, it may be difficult to merely move the objects into the shelves 11 by the drivers 31a-b. If the friction is not fairly even across the surface of the shelf or if there are packages that may yield when subjected to loads, there is a risk that the group of objects is inserted at an angle or that, if it comes to the worst, it will be scattered, so that one or more objects deviate from the desired queue of objects. In such a case the arms 35a-b and their gripping elements 35c-d can be used as abutments. The gripping elements 35c-d are lowered behind the objects that are to be placed on the innermost portion of the shelf 11 (i.e. the rearmost surface of the placed group or the foremost surface of the group with regard to its direction of motion when being placed in the set of shelves). The arms 35a-b are moved towards each other so as to direct the group in the transverse direction. The drivers 31a-b move the group into the set of shelves and the gripping elements 35c-d of the arms 35a-b make resistance. In this manner it is ensured that also groups of a large number of small objects that are difficult to arrange are correctly placed on the shelves.

The handling unit 30 has been sent high up by the crane 20, or if relatively heavy objects are handled with great accelerations, the crane 20 and the handling unit 30 tend to sway opposite the acceleration exerted on the objects. To avoid this inconvenience, the handling unit is provided with stabilising means 37. They can be, for example, gripping means which grip the set of shelves to or from which the objects are conveyed. Also extendable legs can be involved, which offer resistance against the set of shelves to or from which the objects are conveyed and an opposite set of shelves which is arranged on the other side of the crane passage. The stabilising means can, according to the type of set of shelves, engage the shelves or the end walls or some other part of the set of shelves which is arranged in a stable manner.

As is evident from Fig. 7, the logic system, which is also referred to above as the control circuit 50, comprises an identifying means 51, a group assigning means 52, an allocating means 53 and a memory means 54. In this context, it should also be noted that the identifying means 51 can be a separate unit which performs the identification, or a logical unit in a computer. In the latter case, a magnitude is measured by measuring equipment which sends a signal to the identifying means which performs the identification based on this information. Whether units are used, which themselves can perform data processing, or whether unprocessed data are to be sent to a control unit which performs all data processing depends on the application in question. Such decisions are common in this technical field and will not be discussed further. In the description below, the logical steps will be described in more detail, without making a distinction with regard to where in the system the logical step is made.

The identifying means 51 determines the size of an incoming object. The size is determined in all three dimensions: width, depth and height. Based on the width of the object, the group assigning means 52 assigns a group membership to the object. Based on information about the group membership of the object and its size (width, depth and height) the allocating means 53 calculates a suitable place for the object. Input data to the allocating means 53 also comprise information about where there is vacant space in the storage. This information is maintained by the memory means 54. The information can be maintained, for example, in the form of information about vacant space or in the form of information about occupied space of the total space. Other information that is suitably supplied to the allocating means 53 is information about the expected pick rate for the object in question (usually based on the product type of the object). Moreover, it is advantageous if the allocating means 53 also considers information about the number of objects and where in the storage objects of the same product type have previously been stored. Based on this information, the allocating means 54 calculates a suitable place for the object. It is further determined whether a certain number of objects within a certain group membership in a grouping station 66a-c are to be combined into a group or not. If objects are to be combined into a group, the grouping station is commanded to hold incoming objects until objects have been combined so that a group with a desired depth is obtained. When the object or the group of objects is ready to be moved to the storage, the grouping station 66a-c is commanded to transfer the object or the group to the associated loading station 67a-c. Once this has been done, the grouping station 66a-c is ready to receive new objects. The objects or the group of objects in the loading station 67a-c are ready to be placed in the storage and a signal is sent to a crane 20 from the loading station 67a-c or via the allocating means 53 to confirm that the objects are ready to be collected and where they are to be placed. As shown in Fig. 7, update of information in the memory means 54 can occur by signals from the allocating means 53, the grouping station 66, the loading station 67 or the crane 20.

The allocating function is configured to check, for each vacant space in the storage, in which space the incoming object or objects is/are preferably to be placed. For each vacant space, the possible placing of an object in this space is checked against a point system. The object is placed in the space where it achieves the highest point. If a plurality of objects are grouped and the group achieves a higher point than an individual placing, the group is placed in the space where it has achieved the highest point. The point is allocated by the allocating function checking the possible placing against a list of parameters and giving marks or points for each parameter and the highest total point or the highest total mark determining where the object or the group is to be placed. The point system can be configured to imply that the different parameters should be satisfied or not satisfied, that different levels of marks are achieved according to the level of satisfaction or that different parameters have different weight factors to reflect how important it is that they be satisfied.

There are a large number of different modes of operation to be provided with the basic setting that has been described above. The choice of the mode of operation is largely due to external circumstances, such as the number of product types in relation to the total number of objects, the rate of turnover of the storage and the degree of varying rate of turnover between different product types, the chosen priority as to pick rate and storage density etc. Since the system checks the size of the objects, groups them according to a size-dependent group assigning function and allocates place with regard to the size of the objects, a system has, however, been provided which can handle these different modes of operation without necessitating any modification. Due to the floating arrangement, it will also be possible to switch between different modes of operation and the storage can be gradually transferred from being optimised regarding a first mode of operation to being optimised regarding a second mode of operation.

The system is further adapted to rearrange the storage during out-of-service periods. Such out-of-service periods can be in the night, the coffee and lunch breaks of the staff and other short or long interruptions in the supply or removal of objects. Moreover one crane can work with rearrangement while other cranes work with insertion and removal of objects. In normal operation, the objects are placed in the vacant space which at each individual moment achieves the highest point. Since objects are inserted and removed in normal operation of the storage and the cranes, it is common for other vacant spaces to turn up in the meantime, which achieve higher points than the place in which the object was originally placed. Rearrangement can be used, for instance, to collect objects of the same product type in complete groups or collect objects in groups which correspond to complete standard orders which are frequently collected from the storage. Of course, it is possible to use different sets of parameters or different weighting factors at different points of time. For example, in normal operation it is possible to give priority to pick rate and storage density while during rearrangement priority is given to standard groupings or some other parameter which may be difficult to satisfy in normal operation.

It should also be noted that it is not obvious that each individual object is to be allocated a place immediately after being determined as to size, but it is also possible to determine the size of a number of objects and after that allocate a place to each of the objects based on the different sizes and product types of the different objects.

Alternatively, or supplementing the identifying station 51, there may be an identifying station in connection with the feeding conveyor 61 or the depalletiser. For example, it is possible to indicate, via information from the depalletiser, to the control circuit 50 that a large number of objects of a certain type will be arriving. This information can be used, for instance, to prepare the grouping stations 66a-c in such a manner that they are emptied even if there is not time enough to form a complete train of objects before the large number of objects from the pallet are to become grouped.

If a not quite complete train of objects has been standing in a grouping station 66a-c for a given time (based on time and/or if further objects belonging to the same group are not expected to arrive during a certain time), it may still be convenient to place these objects in the storage, thereby releasing a grouping station 67a-c.

Width has been described above as the dimension which extends along an edge transversely to which objects are intended to be moved in connection with insertion and removal from the shelf. Depth has been described as the greatest extent along the direction in which objects are intended to be moved in connection with insertion and removal from the shelf. If objects can be placed on a shelf from different directions which make an angle to each other, it should be noted that width and depth of the shelf will be changed due to the direction from which the objects are handled.

It should also be noted that there may be a large number of additional parameters to be taken into consideration when allocating a place to an object. Examples of such parameters are (in addition to those mentioned above) cold or frozen storage, dry or moist, if blocking is allowed or not, if the objects are especially liable to be stolen (to be arranged difficult of access to individuals) or not, etc.

It will be appreciated that many modifications of the embodiments of the invention as described above are conceivable within the scope of the invention, which is defined in the appended claims.

For example, the number of crane passages 70a-c between the sets of shelves 10 may differ from the number of loading stations 67a-c. Such a station contains some kind of switch unit which can transfer the crane 20 so that it may serve a plurality of loading stations 67a-c or crane passages 70a-c between the set of shelves 10.

It is also possible that for each grouping station 66a-c there may be a plurality of loading stations 67a-c in which groups of objects can be temporarily stored (buffer stock) until a crane 20 can collect them and place them in the sets of shelves 10.

It should also be noted that, of course, it is possible to mix the described technique with other known techniques as to the placing of objects in a storage. For instance, one part of the storage can be designed in the way as described above and another part of the storage can be designed in another way that is considered most suitable for a special type of product.

Where appropriate, it is also possible to design the sets of shelves 10 so as to have different depths D (different for different sets of shelves or different for different portions of one and the same set of shelves) instead of, as shown in the drawings, all sets of shelves 10 having the same depth D along their entire width B.

It is here shown how objects in a group which only partly covers the depth D of a set of shelves 10 are arranged at the front edge of the shelf 11a-f (see Fig. 3). The handling unit may also be provided with drivers which can move a single object to the rearmost part of the set of shelves so that the vacant spaces can be positioned at the front edge of the shelves 11a-f. The design of the drivers can be very simple if the objects are arranged at the front edge of the shelf 11c.

## Claims

1. A system for handling a storage, comprising
an allocating means (53) arranged to allocate a place in a storage to a number of objects (40),
a memory means (54) arranged to maintain information about vacant space (41) in said storage,
an identifying means (51) arranged to identify a size of said objects (40) along at least one dimension (B),
the memory means (54) being arranged to maintain storing information about a size of vacant continuous space (41) in said storage along at least one dimension (B),
**characterised in that** the system further comprises
a group assigning means (52) arranged to assign to each of said objects (40) a group membership based on a group assigning function in which said size along said at least one dimension (B) that has been identified constitutes a first variable,
the system being arranged to combine a plurality of objects (40) which have been assigned the same group membership into a group,
the allocating means being arranged to allocate a said place to said plurality of objects (40) which have been assigned the same group membership into said group based on an allocating function in which said size along said at least one dimension (B) which is intended to be identified constitutes a first variable and the storing information about the size of the vacant continuous space (41) in said storage along said at least one dimension (B) constitutes a second variable, and
the first variable in the allocating function comprising a maximum size of the group along said at least one dimension (B) which is intended to be identified.

2. A system as claimed in claim 1, in which said first variable for assigning the respective group memberships is defined by mutually excluding size ranges of said size along said at least one dimension (B).

3. A system as claimed in claim 1 or 2, in which said maximum size of a group is defined by the actual size (B3) of the object in the group which has the maximum size along said at least one dimension (B).

4. A system as claimed in any one of claims 1-3, in which said maximum size of a group is defined by the maximum size an object in said group membership is allowed to have along said at least one dimension (B).

5. A system as claimed in any one of claims 1-4, in which the identifying means is arranged to identify a maximum width (B) and a maximum depth (D) of said objects (40),
the memory means (54) is arranged to maintain storing information about a maximum width (B) and a maximum depth (D) of vacant continuous space (41) which has a constant depth across its entire width,
the group assigning means (52) is arranged to assign to each of said objects (40) a group membership based on a group assigning function in which the width (B) constitutes a variable,
the allocating means is arranged to allocate a place to said objects (40) or a group, variables in the allocating function comprising width (B) and depth (D) of vacant continuous space (41) and width (B) and depth (C) of said objects (40),
the system being arranged to combine a number of objects of the same group membership into a group so that the group achieves a maximum depth (D) which is smaller than the depth of the vacant continuous space to which the object (40) or the group has been allocated.

6. A system as claimed in claim 5, in which, in case the depth of the continuous space (41) is limited by a plurality of previously allocated objects (40) or groups, the width of the respective continuous space (41) is defined by the width of the respective previously allocated objects (40) or group.

7. A system as claimed in any one of claims 1-6, in which the system is arranged to combine, in at least a first station (66a-c), a plurality of objects (40) which have been assigned the same group membership into a group and, after combining the objects into said group, transfer the group to at least a second station (67a-c).

8. A system as claimed in any one of the preceding claims, which further comprises a handling unit (30) which is provided with two arms (35a-b) which can be extended into a storage space and engage a rear side of an object placed in said storage space.

9. A system as claimed in claim 8, in which the arms (35a-b) each support a gripping element (35c-d) which is arranged to take a neutral position when the arms (34a-b) can be moved into or out of said storage space without engaging objects placed in said storage space and a gripping position when the gripping elements (35c-d) engage the rear side of an object placed in said storage space, so that when the arms (34a-b) are moved out of said storage space said object is removed from said storage space.

10. A system as claimed in claim 8 or 9, in which the handling unit (30) further comprises a number of drivers (31a-b) which are arranged to be able to drive an object from the handling unit (30) into a storage space.

11. A method for handling a storage, comprising the steps of
allocating a place to a number of objects (40) in said storage,
maintaining information about vacant space (41) in said storage,
identifying a size of said objects (40) along at least one dimension (B),
maintaining storing information about a size of vacant continuous space (41) in said storage along at least one dimension (3),
**characterised in that** the method further comprises the steps of
assigning to each of said objects (40) a group membership based on a group assigning function in which said size along said at least one dimension (B) that has been identified constitutes a first variable,
combining a plurality of objects (40) which have been assigned the same group membership into a group, and
allocating said place to said plurality of objects (40) which have been assigned the same group membership into said group based on an allocating function in which said size along said at least one dimension (B) which is intended to be identified constitutes a first variable and the storing information about the size of the vacant continuous space (41) in said storage along said at least one dimension (B) constitutes a second variable,
the first variable in the allocating function comprising a maximum size of the group along said at least one dimension (B) which is intended to be identified.

12. A method as claimed in claim 12, in which said first variable for assigning the respective group memberships is defined by mutually excluding size ranges of said size along said at least one dimension (B).

13. A method as claimed in claim 11 or 12, in which said maximum size of a group is defined by the actual size (B3) of the object in the group which has the maximum size along said at least one dimension (B).

14. A method as claimed in any one of claims 11-13, in which said maximum size of a group is defined by the maximum size an object in said group membership is allowed to have along said at least one dimension (B).

15. A method as claimed in any one of claims 11-14, which further comprises the steps of
identifying a maximum width (B) and a maximum depth (D) of said objects (40),
maintaining storing information about a maximum width (B) and a maximum depth (D) of vacant continuous space (41) which has a constant depth across its entire width,
assigning to each of said objects (40) a group membership based on a group assigning function in which the width (B) constitutes a variable,
allocating a place to said objects (40) or a group, variables in the allocating function comprising width (B) and depth (D) of vacant continuous space (41) and width (B) and depth (D) of said objects (40),
combining a number of objects of the same group membership into a group so that the group achieves a maximum depth (D) which is smaller than the depth of the vacant continuous space to which the object (40) or the group has been allocated.

16. A method as claimed in claim 15, in which, in case the depth of the continuous space (41) is limited by a plurality of previously allocated objects (40) or groups, the width of the respective continuous spaces (41) is defined by the width of the respective previously allocated objects (40) or group.

17. A method as claimed in any one of claims 11-16, which comprises the step of combining in a first station (66a-c) a plurality of objects (40) which have been assigned the same group membership into a group and, after combining the objects into said group, transferring the group to at least a second station (67a-c).

## Patentansprüche

1. System zum Handhaben eines Lagers, das Folgendes umfasst
ein Zuordnungsmittel (53), das dafür ausgelegt ist, einer Anzahl von Gegenständen (40) einen Platz in einem Lager zuzuordnen,
ein Speichermittel (54), das dafür ausgelegt ist, Informationen über freien Raum (41) in dem Lager zu verwalten,
ein Erkennungsmittel (51), das dafür ausgelegt ist, eine Größe der Gegenstände (40) entlang mindestens einer Dimension (B) zu erkennen,
wobei das Speichermittel (54) dafür ausgelegt ist, Lagerungsinformationen über eine Größe von freiem durchgehendem Raum (41) in dem Lager entlang mindestens einer Dimension (B) zu verwalten,
**dadurch gekennzeichnet, dass** das System des Weiteren Folgendes umfasst:
ein Gruppenzuweisungsmittel (52), das dafür ausgelegt ist, jedem der Gegenstände (40) eine Gruppenzugehörigkeit auf der Basis einer Gruppenzuweisungsfunktion zuzuweisen, wobei die Größe entlang der mindestens einen Dimension (B), die erkannt wurde, eine erste Variable darstellt,
wobei das System dafür ausgelegt ist, mehrere Gegenstände (40), denen dieselbe Gruppenzugehörigkeit zugewiesen wurde, zu einer Gruppe zusammenzufassen,
wobei das Zuordnungsmittel dafür ausgelegt ist, den mehreren Gegenständen (40), denen dieselbe Gruppenzugehörigkeit zu der Gruppe zugewiesen wurde, den Platz auf der Basis einer Zuordnungsfunktion zuzuordnen, wobei die Größe entlang der mindestens einen Dimension (B), die erkannt werden soll, eine erste Variable darstellt und die Lagerungsinformationen über die Größe des freien durchgehenden Raumes (41) in dem Lager entlang der mindestens einen Dimension (B) eine zweite Variable darstellt, und
wobei die erste Variable in der Zuordnungsfunktion eine maximale Größe der Gruppe entlang der mindestens einen Dimension (B), die erkannt werden soll, umfasst.

2. System nach Anspruch 1, wobei die erste Variable zum Zuweisen der jeweiligen Gruppenzugehörigkeiten durch gegenseitiges Ausschließen von Größenbereichen der Größe entlang der mindestens einen Dimension (B) definiert ist.

3. System nach Anspruch 1 oder 2, wobei die maximale Größe einer Gruppe durch die tatsächliche Größe (B3) des Gegenstandes in der Gruppe definiert ist, der die maximale Größe entlang der mindestens einen Dimension (B) hat.

4. System nach einem der Ansprüche 1-3, wobei die maximale Größe einer Gruppe durch die maximale Größe definiert ist, die ein Gegenstand in der Gruppenzugehörigkeit entlang der mindestens einen Dimension (B) haben darf.

5. System nach einem der Ansprüche 1-4, wobei das Erkennungsmittel dafür ausgelegt ist, eine maximale Breite (B) und eine maximale Tiefe (D) der Gegenstände (40) zu erkennen,
wobei das Speichermittel (54) dafür ausgelegt ist, Lagerungsinformationen über eine maximale Breite (B) und eine maximale Tiefe (D) von freiem durchgehendem Raum (41) zu verwalten, der eine konstante Tiefe über seine gesamte Breite hat,
wobei das Gruppenzuweisungsmittel (52) dafür ausgelegt ist, jedem der Gegenstände (40) eine Gruppenzugehörigkeit auf der Basis einer Gruppenzuweisungsfunktion zuzuweisen, wobei die Breite (B) eine Variable darstellt,
wobei das Zuordnungsmittel dafür ausgelegt ist, den Gegenständen (40) oder einer Gruppe einen Platz zuzuordnen, wobei die Variablen in der Zuordnungsfunktion eine Breite (B) und eine Tiefe (D) des freien durchgehenden Raumes (41) und eine Breite (B) und eine Tiefe (C) der Gegenstände (40) umfassen,
wobei das System dafür ausgelegt ist, eine Anzahl von Gegenständen derselben Gruppenzugehörigkeit zu einer Gruppe zusammenzufassen, so dass die Gruppe eine maximale Tiefe (D) erreicht, die kleiner als die Tiefe des freien durchgehenden Raumes ist, dem der Gegenstand (40) oder die Gruppe zugeordnet wurde.

6. System nach Anspruch 5, wobei in dem Fall, dass die Tiefe des durchgehenden Raumes (41) durch mehrere zuvor zugeordnete Gegenstände (40) oder Gruppen begrenzt ist, die Breite des jeweiligen durchgehenden Raumes (41) durch die Breite der jeweiligen zuvor zugeordneten Gegenstände (40) oder Gruppe definiert ist.

7. System nach einem der Ansprüche 1-6, wobei das System dafür ausgelegt ist, mehrere Gegenstände (40), denen dieselbe Gruppenzugehörigkeit zugewiesen wurde, in mindestens einer ersten Station (66a-c) zu einer Gruppe zusammenzufassen und, nach dem Zusammenfassen der Gegenstände zu der Gruppe, die Gruppe zu mindestens einer zweiten Station (67a-c) zu übertragen.

8. System nach einem der vorangehenden Ansprüche, das des Weiteren eine Handhabungseinheit (30) umfasst, die mit zwei Armen (35a-b) ausgestattet ist, die in einen Lagerraum hinein ausgefahren werden können und eine Rückseite eines in dem Lagerraum angeordneten Gegenstandes in Eingriff nehmen können.

9. System nach Anspruch 8, wobei die Arme (35a-b) jeweils ein Greifelement (35c-d) stützen, das dafür geeignet ist, eine Neutralstellung einzunehmen, in der die Arme (34a-b) in den Lagerraum hinein oder aus dem Lagerraum heraus bewegt werden können, ohne in dem Lagerraum befindliche Gegenstände in Eingriff zu nehmen, und eine Greifstellung einzunehmen, in der die Greifelemente (35c-d) die Rückseite eines in dem Lagerraum befindlichen Gegenstandes in Eingriff nehmen, so dass, wenn die Arme (34a-b) aus dem Lagerraum heraus bewegt werden, der Gegenstand aus dem Lagerraum herausgenommen wird.

10. System nach Anspruch 8 oder 9, wobei die Handhabungseinheit (30) des Weiteren eine Anzahl von Schubmitteln (31a-b) umfasst, die dafür ausgelegt sind, einen Gegenstand von der Handhabungseinheit (30) in einen Lagerraum hinein schieben zu können.

11. Verfahren zum Handhaben eines Lagers, das die folgenden Schritte umfasst:
Zuordnen eines Platzes zu einer Anzahl von Gegenständen (40) in dem Lager,
Verwalten von Informationen über freien Raum (41) in dem Lager,
Erkennen einer Größe der Gegenstände (40) entlang mindestens einer Dimension (B),
Verwalten von Lagerungsinformationen über eine Größe von freiem durchgehendem Raum (41) in dem Lager entlang mindestens einer Dimension (B),
**dadurch gekennzeichnet, dass** das Verfahren des Weiteren die folgenden Schritte umfasst:
Zuweisen einer Gruppenzugehörigkeit zu jedem der Gegenstände (40) auf der Basis einer Gruppenzuweisungsfunktion, wobei die Größe entlang der mindestens einen Dimension (B), die erkannt wurde, eine erste Variable darstellt,
Zusammenfassen mehrerer Gegenstände (40), denen dieselbe Gruppenzugehörigkeit zugewiesen wurde, zu einer Gruppe, und
Zuordnen des Platzes zu den mehreren Gegenständen (40), denen dieselbe Gruppenzugehörigkeit zu der Gruppe zugewiesen wurde, auf der Basis einer Zuordnungsfunktion, wobei die Größe entlang der mindestens einen Dimension (B), die erkannt werden soll, eine erste Variable darstellt und die Lagerungsinformationen über die Größe des freien durchgehenden Raumes (41) in dem Lager entlang der mindestens einen Dimension (B) eine zweite Variable darstellt,
wobei die erste Variable in der Zuordnungsfunktion eine maximale Größe der Gruppe entlang der mindestens einen Dimension (B), die erkannt werden soll, umfasst.

12. Verfahren nach Anspruch 12, wobei die erste Variable zum Zuweisen der jeweiligen Gruppenzugehörigkeiten durch gegenseitiges Ausschließen von Größenbereichen der Größe entlang der mindestens einen Dimension (B) definiert wird.

13. Verfahren nach Anspruch 11 oder 12, wobei die maximale Größe einer Gruppe durch die tatsächliche Größe (B3) des Gegenstandes in der Gruppe definiert wird, der die maximale Größe entlang der mindestens einen Dimension (B) hat.

14. Verfahren nach einem der Ansprüche 11-13, wobei die maximale Größe einer Gruppe durch die maximale Größe definiert wird, die ein Gegenstand in der Gruppenzugehörigkeit entlang der mindestens einen Dimension (B) haben darf.

15. Verfahren nach einem der Ansprüche 11-14, das des Weiteren die folgenden Schritte umfasst:
Erkennen einer maximalen Breite (B) und einer maximalen Tiefe (D) der Gegenstände (40),
Verwalten von Lagerungsinformationen über eine maximale Breite (B) und eine maximale Tiefe (D) von freiem durchgehendem Raum (41), der eine konstante Tiefe über seine gesamte Breite hat,
Zuweisen einer Gruppenzugehörigkeit zu jedem der Gegenstände (40) auf der Basis einer Gruppenzuweisungsfunktion, wobei die Breite (B) eine Variable darstellt,
Zuordnen eines Platzes zu den Gegenständen (40) oder einer Gruppe, wobei die Variablen in der Zuordnungsfunktion eine Breite (B) und eine Tiefe (D) des freien durchgehenden Raumes (41) und eine Breite (B) und eine Tiefe (D) der Gegenstände (40) umfassen,
Zusammenfassen einer Anzahl von Gegenständen derselben Gruppenzugehörigkeit zu einer Gruppe, so dass die Gruppe eine maximale Tiefe (D) erreicht, die kleiner als die Tiefe des freien durchgehenden Raumes ist, dem der Gegenstand (40) oder die Gruppe zugeordnet wurde.

16. Verfahren nach Anspruch 15, wobei in dem Fall, dass die Tiefe des durchgehenden Raumes (41) durch mehrere zuvor zugeordnete Gegenstände (40) oder Gruppen begrenzt ist, die Breite der jeweiligen durchgehenden Räume (41) durch die Breite der jeweiligen zuvor zugeordneten Gegenstände (40) oder Gruppe definiert wird.

17. Verfahren nach einem der Ansprüche 11-16, das den Schritt umfasst, mehrere Gegenstände (40), denen dieselbe Gruppenzugehörigkeit zugewiesen wurde, in einer ersten Station (66a-c) zu einer Gruppe zusammenzufassen und, nach dem Zusammenfassen der Gegenstände zu der Gruppe, die Gruppe zu mindestens einer zweiten Station (67a-c) zu übertragen.

## Revendications

1. Système de manutention d'un magasin, comprenant :
un moyen d'allocation (53) agencé afin d'allouer une place dans un magasin à un certain nombre d'objets (40),
un moyen de mémoire (54) agencé afin de conserver des informations concernant un espace vacant (41) dans ledit magasin,
un moyen d'identification (51) agencé afin d'identifier une taille desdits objets (40) suivant au moins une dimension (B),
le moyen de mémoire (54) étant agencé afin de conserver des informations d'emmagasinage concernant une taille d'espace continu vacant (41) dans ledit magasin suivant au moins une dimensions (B),
**caractérisé en ce que** le système comprend en outre :
un moyen d'assignation de groupe (52) agencé afin d'assigner à chacun desdits objets (40) une appartenance à un groupe sur la base d'une fonction d'assignation de groupe, dans laquelle ladite taille suivant ladite au moins une dimensions (B) qui a été identifiée constitue une première variable,
le système étant agencé afin de combiner une pluralité d'objets (40) auxquels a été assignée la même appartenance au groupe en un groupe,
le moyen d'allocation étant agencé afin d'allouer la dite place à ladite pluralité d'objets (40) auxquels a été assignée la même appartenance au groupe dans ledit groupe sur la base d'une fonction d'allocation, dans laquelle ladite taille suivant ladite au moins une dimension (B) qui est encline à être identifiée constitue une première variable et l'information d'emmagasinage concernant la taille de l'espace continu vacant (41) dans ledit magasin suivant ladite au moins une dimension (B) constitue une seconde variable, et
la première variable dans la fonction d'allocation comprenant une taille maximale du groupe suivant ladite au moins une dimension (B) qui est encline à être identifiée.

2. Système selon la revendication 1, dans lequel ladite première variable pour assigner l'appartenance au groupe respective est définie par des plages de tailles s'excluant mutuellement de ladite taille suivant ladite au moins une dimension (B).

3. Système selon la revendication 1 ou 2, dans lequel ladite taille maximale d'un groupe est définie par la taille effective (B3) de l'objet dans le groupe qui a la taille maximale suivant ladite au moins une dimension (B).

4. Système selon une quelconque des revendications 1 à 3, dans lequel ladite taille maximale d'un groupe est définie par la taille maximale qu'un objet dans ladite appartenance au groupe est autorisé à avoir suivant ladite au moins une dimension (B).

5. Système selon une quelconque des revendications 1 à 4, dans lequel le moyen d'identification est agencé afin d'identifier une largeur maximale (B) et une profondeur maximale (D) desdits objets (40),
le moyen de mémoire (54) est agencé afin de conserver des informations d'emmagasinage concernant une largeur maximale (B) et une profondeur maximale (D) d'un espace continu vacant (41) qui a une profondeur constante sur sa largeur totale,
le moyen d'assignation de groupe (52) est agencé afin d'assigner à chacun desdits objets (40) une appartenance au groupe sur la base d'une fonction d'assignation de groupe, dans laquelle la largeur (B) constitue une variable,
le moyen d'allocation est agencé afin d'allouer une place ou un groupe auxdits objets (40), les variables de la fonction d'allocation comprenant la largeur (B) et la profondeur (D) de l'espace continu vacant (41) et la largeur (B) et la profondeur (C) desdits objets (40),
le système étant agencé afin de combiner un certain nombre d'objets de la même appartenance à un groupe dans un groupe, de sorte que le groupe atteigne une largeur maximale (D) qui est plus petite que la profondeur de l'espace continu vacant auquel l'objet (40) ou le groupe a été alloué.

6. Système selon la revendication 5, dans lequel, au cas où la profondeur de l'espace continu (41) est limitée par une pluralité d'objets (40) ou groupes alloués précédemment, la largeur de l'espace continu respectif (41) est définie par la largeur des objets (40) ou groupes respectifs précédemment alloués.

7. Système selon une quelconque des revendications 1 à 6, dans lequel le système est agencé afin de combiner, dans au moins un premier poste (66a-c), une pluralité d'objets (40) auxquels a été assignée la même appartenance à un groupe en un groupe et, après la combinaison des objets dans ledit groupe, transférer le groupe à au moins un second poste (67a-c).

8. Système selon une quelconque des revendications précédentes, qui comprend en outre une unité de manutention (30) qui est pourvue de deux bras (35a-b), qui peuvent être étendus dans un espace d'emmagasinage et se mettre en prise avec un côté arrière d'un objet placé dans ledit espace d'emmagasinage.

9. Système selon la revendication 8, dans lequel les bras (35a-b) supportent chacun un élément de préhension (35c-d) qui est agencé afin d'adopter une position neutre lorsque les bras (34a-b) peuvent être déplacés dans ou hors dudit espace d'emmagasinage sans se mettre en prise avec les objets placés dans ledit espace d'emmagasinage et une position de préhension lorsque les éléments de préhension (35c-d) se mettent en prise avec le côté arrière d'un objet placé dans ledit espace d'emmagasinage, de sorte que, quand les bras (34a-b) sont déplacés hors dudit espace d'emmagasinage, ledit objet est retiré dudit espace d'emmagasinage.

10. Système selon la revendication 8 ou 9, dans lequel l'unité de manutention (30) comprend en outre un certain nombre d'éléments d'entrainement (31a-b) qui sont agencés afin d'être en mesure d'entrainer un objet de l'unité de manutention (30) dans un espace d'emmagasinage.

11. Procédé de manutention d'un magasin, comprenant les étapes consistant à :
allouer une place à un certain nombre d'objets (40) dans ledit magasin,
conserver des informations concernant un espace vacant (41) dans ledit magasin,
identifier une taille desdits objets (40) suivant au moins une dimension (B),
conserver des informations d'emmagasinage concernant une taille d'un espace continu vacant (41) dans ledit magasin suivant au moins une dimension (B),
**caractérisé en ce que** le procédé comprend en outre les étapes consistant à :
assigner à chacun desdits objets (40) une appartenance à un groupe sur la base d'une fonction d'assignation de groupe, dans laquelle ladite taille suivant ladite au moins une dimension (B) qui a été identifiée constitue une première variable,
combiner une pluralité d'objets (40) auxquels a été assignée la même appartenance à un groupe en un groupe, et
allouer la dite place à ladite pluralité d'objets (40) auxquels a été assignée la même appartenance au groupe dans ledit groupe sur la base d'une fonction d'allocation, dans laquelle ladite taille suivant au moins une dimensions (B) qui est encline à être identifiée constitue une première variable et l'information d'emmagasinage concernant la taille de l'espace continu vacant (41) dans ledit magasin suivant ladite au moins une dimension (B) constitue une seconde variable,
la première variable dans la fonction d'allocation comprenant une taille maximale du groupe suivant ladite au moins une dimension (B) qui est encline à être identifiée.

12. Procédé selon la revendication 12, dans lequel ladite première variable pour assigner l'appartenance à un groupe respective est définie par des plages de tailles s'excluant mutuellement de ladite taille suivant ladite au moins une dimension (B).

13. Procédé selon la revendication 11 ou 12, dans lequel ladite taille maximale d'un groupe est définie par la taille effective (B3) de l'objet dans le groupe qui a la taille maximale suivant ladite au moins une dimension (B).

14. Procédé selon une quelconque des revendications 11 à 13, dans lequel ladite taille maximale d'un groupe est définie par la taille maximale qu'un objet dans ladite appartenance à un groupe est autorisé à avoir suivant au moins une dimension (B).

15. Procédé selon une quelconque des revendications 11 à 14, qui comprend en outre les étapes consistant à :
identifier une largeur maximale (B) et une profondeur maximale (D) desdits objets (40),
conserver des informations d'emmagasinage concernant une largeur maximale (B) et une profondeur maximale (D) de l'espace continu vacant (41) qui a une profondeur constante sur sa largeur totale,
assigner à chacun desdits objets (40) une appartenance à un groupe sur la base d'une fonction d'assignation de groupe, dans laquelle la largeur (B) constitue une variable,
allouer une place ou un groupe auxdits objets (40), les variables de la fonction d'allocation comprenant la largeur (B) et la profondeur (D) d'un espace continu vacant (41) et la largeur (B) et la profondeur (D) desdits objets (40),
combiner un certain nombre d'objets de la même appartenance à un groupe en un groupe de sorte que le groupe atteigne une profondeur maximale (D) qui est plus petite que la profondeur de l'espace continu vacant auquel l'objet (40) ou le groupe a été alloué.

16. Procédé selon la revendication 15, dans lequel, au cas où la profondeur de l'espace continu (41) est limitée par une pluralité d'objets (40) ou groupes alloués précédemment, la largeur des espaces continus respectifs (41) est définie par la largeur des objets (40) ou groupes respectifs précédemment alloués.

17. Procédé selon une quelconque des revendications 11 à 16, qui comprend l'étape consistant à combiner dans un premier poste (66a-c) une pluralité d'objets (40) auxquels a été assignée la même appartenance à un groupe en un groupe et, après la combinaison des objets en ledit groupe, transférer le groupe à au moins un second poste (67a-c).
